# EUROPEAN PATENT SPECIFICATION

(11) **EP 2 596 692 B1**
(45) Date of publication and mention of the grant of the patent: **07.01.2015**
(21) Application number: 12193806.2
(22) Date of filing: 22.11.2012
(51) Int. Cl.: A01B 45/02, A01G 1/12

(54) **Aeration device**
Vertikutiergerät
Dispositif d'aération

(30) Priority: 23.11.2011 BE 201100683
(43) Date of publication of application: 29.05.2013
(73) Proprietor: Eliet NV, 8553 Otegem (BE)
(72) Inventor: Lietaer, Frederic, 8553 Otegem (BE)
(74) Representative: Chielens, Kristof

(56) References cited:
- EP-A1- 0 685 148
- EP-A1- 1 632 120
- DE-A1-102006 034 435
- FR-A1- 2 751 167
- US-A- 2 592 269
- US-A- 3 859 685

## Description

The present invention relates to an aeration device designed to aerate a grass strip, comprising a rotating shaft which is provided along its length with a number of aerating blades which are at right angles to the shaft and designed to loosen and remove parts of the grass strip, a guide device for collecting the material loosened by the aerating blades and discharging it in the direction of a collecting device.

In order to obtain a beautiful lawn or grass strip, a lawn has to be aerated at regular intervals. In this case, the upper thatch layer, consisting of plant material, such as remains of mowed grass, dead grass, stalks, shoots, moss, weeds, organic waste, etc..., is removed, as a result of which air, water and nutrients can be absorbed more readily by the grass.

During aeration, the upper layer of the lawn is removed by means of blades or teeth, so that the ground surface is loosened up. There are two types of aerator, on the one hand, there are the manual aerators, in which a grass strip is manually aerated by means of a rake which is provided with blades (aerator rake). On the other hand, there are electrical aerators and aerators which are driven by a petrol engine. The present invention relates to a driven aeration device.

Such devices are already known. Thus, the Dutch patent publication NL 1006225 describes a device for treating a grass strip, which device comprises a frame which can be attached to a tractor and which is supported by rollers, the height of which can be adjusted. The frame supports a horizontal drivable shaft which is at right angles to the direction of movement of the frame and has projecting arms which are provided with plate-shaped blades at their free end, the working ranges of which overlap, and are designed to loosen and remove parts of the grass strip. In order to make it possible to readily discharge the loosened material to be removed, the device described comprises a conveyor belt for collecting the material loosened by the blades and discharging it. A similar device is described in German patent publication DE 43 14 081 A1.

The loosened material can consequently be discharged by means of the conveyor belt to a carriage travelling alongside the device or to a container connected to the conveyor belt in which the loosened material can be temporarily accommodated.

European patent publication EP 1 632 120 describes an aeration device for aerating a grass strip which comprises a rotating drum, designed to loosen parts of the grass strip, and a collecting device. In accordance with EP 1 632 120, the loosened material is discharged in the direction of the collecting device by means of an air flow which is generated by the drum.

However, since the loosened material often consists of voluminous material (e.g. moss), the known aeration devices have the drawback that the collecting device is not being filled evenly and that the discharge opening quickly becomes blocked (accumulation) by the loosened material. Although there is often still sufficient free space behind the accumulation, the supply of additional material is being slowed down, which fairly quickly brings about an overflowing of the collecting device. As a result thereof, the operator often has to interrupt his work in order to empty an unevenly filled collecting device.

In order to solve the above problem, FR 2 751 167 discloses a guide device which is designed in such a manner that it comprises two conveyor belts which rotate in opposite directions to one another, as a result of which the loosened material is compacted between these conveyor belts while it is being discharged.

US patent publication US 3,859,685 also describes a solution for storing all of the loose material in an efficient manner. US 3,859,685 discloses a sweeping machine with a rotating brush which is suitable for the removal and storage of freshly mowed grass and leaves from lawns, on the one hand, and waste from car parks, on the other hand. In order to limit the volume of the removed material in the storing device, US 3,859,685 proposes to pass the removed collected material onto a conveyor belt which then passes a pair of roller bodies which compact the material. US 3,859,685 also describes a variant, in which the loosened material is compacted by means of a number of roller bodies which adjoin one another. However, this device has the drawback that when it is being used on lawns, it sometimes removes more material than is required, and thus also discharges non-voluminous materials, such as for example soil and sand, as a result of which the collecting device quickly fills up and is furthermore relatively heavy.

It is an object of the present invention to provide an alternative device which also makes it possible to make optimum use of the space which is available in a collecting device, by means of which the risk of blockage is also greatly reduced and in which the device is in particular suitable for selectively discharging and storing loose material. It is a particular object of the device to provide a device which allows the removal of only the voluminous materials.

The object of the invention is achieved by providing an aeration device designed to aerate a grass strip, comprising a rotating shaft which is provided along its length with a number of aerating blades which are at right angles to the shaft and designed to loosen and remove parts of the grass strip, a guide device for collecting the material loosened by the aerating blades and discharging it in the direction of a collecting device, in which said guide device comprises lower guide means, formed by a number of rotatable roller bodies placed next to each other, and upper guide means, formed by a rotatable pressure-exerting roller, which can be rotated in opposite directions to one another, as a result of which the loosened material is compacted between said guide means while it is being discharged in which the lower guide means comprise at least three spaced-apart lower roller bodies as a result of which the loosened material is at least sieved while it is being discharged before it is compacted between the pressure-exerting roller and a lower roller body which is situated underneath. In a preferred embodiment of the aeration device according to the invention, the lower guide means comprise at least four spaced-apart lower roller bodies. In particular, the lower roller bodies extend in a horizontal direction next to one another. Such an embodiment has the advantage that any soil loosened by the aerating device can drop through the lower guide means, in the space between the adjacent roller bodies, during discharge in the direction of the collecting device, as a result of which it does not end up in the collecting device.

As a result of the fact that the roller bodies of the lower guide means are spaced apart, an intermediate space is created between two adjacent roller bodies. Through this intermediate space, (less voluminous) material which has been carried along, such as soil and sand, can be sieved or filtered from the loosened (voluminous) material.

Furthermore, the pressure-exerting roller will ensure, together with the lower roller body positioned underneath, that the material loosened by the aeration device is compacted and that the collecting device can be filled virtually completely. In addition, the risk of material accumulating is minimal with such a device, since the pressure force with which the loosened material is pushed into the collecting device, will push any accumulated material out of the way. Furthermore, the material present in the collecting device can practically not return as the passage (gap) between the pressure-exerting roller and the roller body situated underneath is too small.

In a preferred embodiment of the aeration device according to the invention, the mutual distance between the lower roller bodies is adjustable. This makes it possible to change the space between the rollers by making it larger or smaller. This may be necessary in order to ensure that virtually all of the soil loosened by the blades can be sieved out, depending on the type of soil and the degree of moisture. In order to be able to adjust the mutual distance between the lower roller bodies, the aeration device according to the present invention comprises first adjustment means. These adjustment means may, for example, comprise a threaded rod which will connect the rollers to one another. In particular, the distance between the lower roller bodies can be adjusted between 0.5 and 5 mm.

According to a preferred embodiment of the aeration device according to the invention, said pressure-exerting roller is arranged so as to be movable counter to a spring force. Preferably, the pressure-exerting roller comprises compression springs or tension springs for this purpose. Because the roller body can "spring away", as it were, this embodiment ensures that relatively large objects (such as pebbles, twigs, etc.) cannot become stuck and thus damage the aeration device.

In a more preferred embodiment of the device according to the invention, the distance between the pressure-exerting roller and the (lower) roller body situated underneath can also be adjusted. In order to be able to adjust this distance, the aeration device according to the present invention comprises second adjustment means. These second adjustment means may, for example, comprise a pivoting container which is connected to the pressure-exerting roller. In particular, the distance between the pressure-exerting roller and the (lower) roller situated underneath can be adjusted between 0.5 and 10 mm. This so-called vertical adjustment makes it possible to modify the passage to the collecting device, as it may be necessary to increase or decrease the size of the passage, depending on the specific state of the loosened material (e.g. moist or dry material), in order to thus prevent accumulation or blockage.

In an advantageous embodiment of the aeration device according to the invention, said guide means have a width which at least corresponds to the working width of the aerating blades.

The various roller bodies of the lower guide means all rotate in the same direction and in this way transport the loosened material in the direction of the last roller where it is compacted between said last roller and the (pressure-exerting) roller situated above (upper guide means). In a first preferred embodiment of the aeration device, the upper guide means, in particular the pressure-exerting roller, rotate at a higher speed than the lower guide means in order to prevent a part of the loosened material from remaining behind on the lower guide means. According to a second alternative preferred embodiment, the upper guide means, in particular the pressure-exerting roller, have a larger diameter than the lower guide means. Both said embodiments ensure that more material is forced in the direction of the collecting device and prevent material from remaining behind on the lower guide means.

In a particular embodiment of the aeration device according to the invention, the rotating shaft furthermore comprises a number of carrier bodies along its length which are provided with a number of radially extending wing elements on their periphery which, in use, generate an air displacement. The generated air displacement will ensure that the loosened material is discharged more readily and in particular more quickly in the direction of said guide means. Preferably, the wing elements are made from a flexible and pliable material, such as nylon, for example.

In order to further explain the characteristics of the present invention and to indicate additional advantages and features thereof, a more detailed description of the aeration device according to the invention is given below. It will be clear that nothing in the following description can be interpreted as a limitation of the scope of protection defined in the claims.

In this description, reference numerals are used to refer to the attached drawings, in which:
- *Fig. 1* *shows a perspective view of an embodiment of the aeration device according to the invention in which the lower guide means are formed by a number of adjacent roller bodies;*
- *Fig. 2* *shows a detail view of a carrier body provided with three wing elements;*
- *Fig. 3* *shows a view of the aeration device according to the invention illustrating the drive mechanism of the guide means;*
- *Figs. 4* *and* *5* *show, on the one hand, the first adjustment means which enable the adjustment of the distance between the lower roller bodies and, on the other hand, the second adjustment means which enable the adjustment of the distance between the pressure-exerting roller and the roller body (6a4) situated underneath;*

The present invention relates essentially to a collecting and supporting system which can be fitted on devices which are designed to mechanically loosen and lift parasitic weeds, remains of mowed grass, dead leaves, organic waste, thatch, etc. Such devices are known as aeration devices. In addition, the system according to the present invention provides filtration of the loosened material, so that material which, in principle, does not have to be discharged, such as for example sand and loose soil, is indeed not discharged.

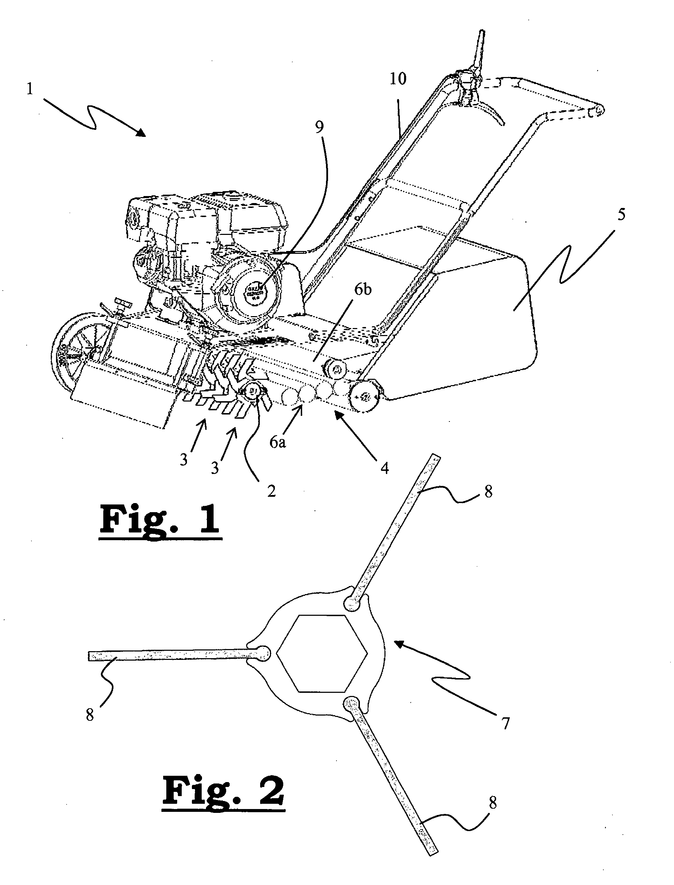

The aeration device (1) illustrated in the figures comprises a sheet-steel housing or frame on which a motor (9) (e.g. a 4-stroke engine) is arranged. The frame is supported by two front and two rear wheels. The motor (9) will drive a shaft (2) via a transmission belt which, as can be seen in Fig. 1, is provided along its length with a number of aerating blades (3) which are at right angles to the shaft. These blades (3) can loosen and remove parts of the grass strip. Which type of blade is chosen depends on the circumstances. The working depth (depth to which the blades are pushed into the ground during use) of the blades (3) is adjustable and preferably varies between 0 and 3 mm.

The aeration device (1) is also provided with an optionally height-adjustable push handle (10). Preferably, the push handle (10) is designed to be floating, so that it accurately follows any unevenness in its path, as a result of which the arm pressure on the user is neutralized.

Furthermore, the aeration device (1) comprises a guide device (4) for collecting the material loosened by the aerating blades (3) and discharging it in the direction of a collecting device (5). In the illustrated device, the collecting device (5) is designed as a container which is attached to the frame and which can temporarily accommodate the loosened material. However, embodiments in which the collecting device (5) is a carriage which travels with the aeration device (1) also fall within the scope of protection of the present invention.

According to the present invention, the guide device (4) comprises lower (6a) and upper (6b) guide means which rotate in opposite directions to one another and which form the abovementioned collecting and supporting system. The two guide means (6a;6b) rotating in opposite directions prevent accumulation and blockage of the discharge. Said guide means (6a;6b) will also compact the loosened material between said guide means (6a;6b) while it is being discharged, so that the volume thereof will be greatly reduced. The guide means (6a;6b) have a width which at least corresponds to the working width of the blade shaft (2) and are, as can be seen in the attached figures, arranged one above the other and a short distance apart. The lower guide means (6a) will rotate clockwise (in order to thus move the loosened material in the direction of the collecting device), whereas the upper guide means (6b) will rotate counterclockwise.

During aeration, not only are thatch as well as moss and weeds removed, but some soil and sand will be carried along with the loosened stream of material. The aim is for as little as possible of these undesired materials to end up in the storage device. Therefore, the aeration device according to the invention is provided with a sieving and/or filtering function. To this end, the sand or the soil which moves across the lower guide means (6a) will be separated from the other, more voluminous material, and will be returned to the lawn. This is achieved by positioning the rollers of the lower guide means in such a manner that a space (gap) is present between the rollers into which the respective material can drop and be returned to the lawn. In particular, the intermediate distance between the rollers of the lower guide means can be adjusted (modified) by means of first adjustment means (adjustment in the horizontal plane) in such a manner that it is possible to adjust the intermediate distance between the rollers based on the type of soil and the moisture content, and thus to achieve sieving of said soil (or sand).

The guide means (6a;6b) are arranged in such a manner that both guide means (6a;6b) virtually touch each other at the end of the path which the loosened material travels on the lower guide means (6a), as a result of which the loosened material is compacted. By compacting the loosened material, the available space of the collecting device (5) can be used in an optimum manner. Routinely, a gap with a width of 0.5 mm will be present between the so-called pressure-exerting roller (6b) and the roller (6a4) situated underneath. According to the present invention, the distance between the pressure-exerting roller (6b) and the roller body (6a4) situated underneath can be adjusted by means of second adjustment means (adjustment in the vertical plane). This adjustment option will ensure the operation of the aeration device under all circumstances (wet lawn as a result of dew at dawn or rain, dry conditions, much or little moss, mowed or unmowed lawn, etc.). The gap between the pressure-exerting roller (6b) and the roller (6a4) situated underneath can be adjusted between 0.5 mm and 10 mm.

It is also possible to adjust the speed at which the guide means (6a;6b) rotate, preferably the speed of the guide means (6a;6b) can be set separately. The lower guide means (6a) will determine the speed and force with which the loosened material which has been collected by the lower guide means (6a) is taken to the collecting device (5).

In a classic system, the organic material which has been raked together is thrown into a collecting device. The throwing distance of the loosened material was dependent on its weight, the adhesive power and the degree of resistance to being removed from the grass strip. As a result thereof, the collecting device does not fill up evenly and material often accumulates near the discharge opening (which is situated directly at the inlet of the collecting device). Although there is often ample free space behind the accumulation, all additional supply of material is slowed down by the accumulation, which relatively quickly results in an overflowing collecting container. Consequently, the user often has to interrupt his work in order to empty a badly filled collecting device, which in turn results in a loss of efficiency.

As a result of the present invention, it is not the inertia and kinetic energy of the "flying" piece of loosened material which ensure that the collecting device is filled, but the combination of the lower and upper guide means (6a and 6b) which determine the force with which the material is pushed into the collecting device (5). The risk of a blockage occurring at the location of the discharge opening is thus greatly reduced, as the factors mentioned earlier (weight, adhesive power, resistance) now have no effect. Besides, in (the rare) case any accumulation should occur, this will be pushed out of the way as a result of the pressure force of the system.

Fig. 1 shows a view of a possible embodiment of the aerating device (1) according to the invention. The lower guide means are formed by a sequence of rotatable roller bodies (6a1;6a2;6a3;6a4). These roller bodies are arranged together at an adjustable distance apart, so that there is still a gap between the rollers. The roller bodies which form part of the lower guide means all rotate in the same direction (in principle clockwise) and pass the material from roller body to roller body until it is compacted between the last roller body and the pressure-exerting roller (6b) (upper guide means) situated thereabove and is passed into the collecting device (5). In order to move the material in the direction of the collecting device, four adjacent roller bodies are present in the illustrated device (1). At least three rollers are required since the first two rollers form a receiving platform as it were on which the loosened material lands, and the third roller, in combination with the pressure-exerting roller (6b) situated above, will carry out the compression. This aeration device according to the invention has the advantage that soil which is not desired in the collecting device drops in between the adjacent roller bodies and lands on the ground.

In order to prevent relatively large objects, such as for example pebbles, twigs, etc. from becoming stuck in the funnel-shaped inlet opening (11), the upper guide means, the roller body (6b), is held in position by means of tension springs (in an alternative embodiment, it is also possible to use compression springs). When a relatively large object ends up on the lower guide means (6a), the upper guide means, in particular the roller body (6b), will spring back upwards slightly in order to allow the relatively large object through.

In a preferred embodiment of the device according to the invention, the rotating shaft (2) furthermore comprises a number of carrier bodies (7) which are arranged along its length and which are securely fixed to the shaft (and consequently co-rotate with said shaft), which carrier bodies (7) are provided with a number of radially extending wing elements (8) on their periphery which generate an air displacement when the aeration device (1) is in use. The generated air displacement will ensure that the loosened material is discharged more readily and in particular more quickly in the direction of said guide means (6a;6b). In addition, the carrier bodies (7) which are provided with the wing bodies (8) will ensure that the lower guide means (6a) are filled perfectly. Preferably, the wing elements (8) are made from a flexible and pliable material, such as nylon for example.

The carrier bodies (7) (with wing elements (8)) are preferably arranged between the aerating blades (3) in an alternating manner. In a possible embodiment (see Fig. 2), the carrier bodies (7) are extruded profiles with preshaped chambers (spaces), each of which retains an insertable (and replaceable) wing element. The wing elements (8) can be moved in and out of the carrier body (7). One end of each wing element (8) is provided with a thickening which fits into the chamber. The shape of the carrier body (7) has been chosen such that a certain angular rotation on the wing element (8) is possible. As the blades (3) wear down, the wing elements (8) will also wear down systematically and will also have to be replaced in due course.

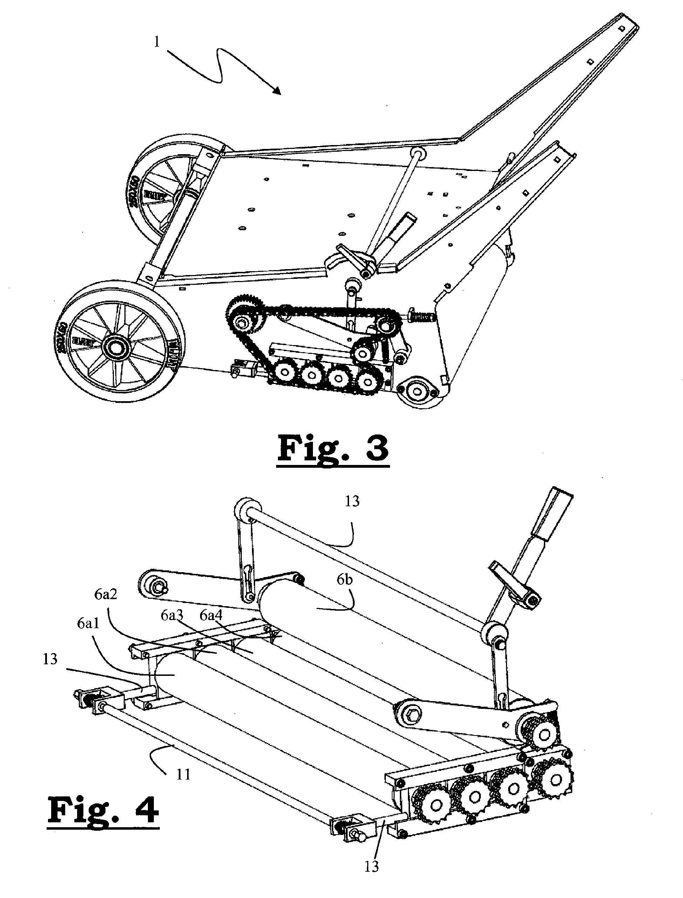

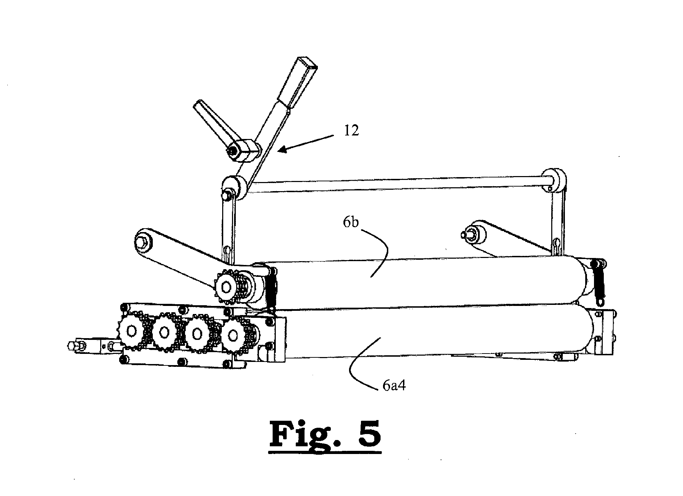

Finally, the first and second adjustment means which make it possible to adjust the distance between the lower roller bodies and the distance between the pressure-exerting roller and the roller body (6a4) situated underneath, respectively, will be described below with reference to Figs. 3 to 5.

Each roller is provided with its own individual suspension (using bearings). The suspensions of these adjacent rollers are arranged in a guide and are able to move therein. The suspension of the last roller (lower compacting roller) before the collecting device (5) is fixedly arranged. The suspensions of the rollers situated in front thereof are connected to each other by means of an uninterrupted threaded rod (13). The pitch of the screw thread of this threaded rod (13) is different for each roller. Thus, one revolution of the threaded rod will move the first roller by a distance of the thread interval, while the second roller is moved by two thread intervals due to a double pitch. The increase of the distance between the rollers thus remains one interval. In order to ensure that the rollers are moved in parallel, the roller suspension will have to be moved evenly on both sides of the machine. To this end, the same type of threaded rod is provided on each side and passes through the suspensions. At the end of each threaded rod, a bevel gear is provided. Also, a shaft (11) is arranged at right angles to the threaded rods and is also provided at both its ends with a bevel gear which, in each case, meshes with the bevel gear of the respective threaded rod. By rotating the shaft (11), each threaded rod will be rotated an equal amount by means of the bevel gear transmission and consequently move the rollers evenly.

The suspension of the upper roller is provided on a movable (pivoting) container (12). On both sides of the machine, said container is pulled down by means of a tension spring. The stop against which said tension spring pulls the container is adjustable. In this case as well, this adjustment has to be carried out evenly on both sides in order to ensure that the gap between the rollers runs parallel. In a possible embodiment, the adjustment is based on an eccentric cam. By connecting the stop on both sides to this cam which may be on the same shaft, it is possible to rotate both cams through the same angle with one adjustment of the shaft, thus evenly moving the stop which is connected to this cam on each side.

Finally, it should be noted that the core idea of the present invention, in particular the prevention of accumulation and blockage by means of the presence of two guide means (6a;6b) (collecting-supporting system) which rotate in opposite directions to one another in combination with filtering out (sieving out) specific materials can also be used with other devices than the above-described aeration device (1). Thus, this idea can also be used with reseeding devices for improved discharge of soil, for forming sowing furrows or with collecting apparatus which can be used to collect leaves, grass or other organic material which can be found on top of grass. Devices of such design consequently also fall within the scope of protection of the present invention.

## Claims

1. Aeration device (1) designed to aerate a grass strip, comprising a rotating shaft (2) which is provided along its length with a number of aerating blades (3) which are at right angles to the shaft and designed to loosen and remove parts of the grass strip, a guide device (4) for collecting the material loosened by the aerating blades (3) and discharging it in the direction of a collecting device (5), **characterized in that** said guide device comprises lower (6a) guide means, formed by a number of rotatable roller bodies placed next to each other, and upper (6b) guide means, formed by a rotatable pressure-exerting roller (6b), which can be rotated in opposite directions to one another, as a result of which the loosened material is compacted between said guide means (6a and 6b) while it is being discharged, and that the lower guide means comprise at least three spaced-apart lower roller bodies (6a1;6a2;6a3;6a4) as a result of which the loosened material is at least sieved while it is being discharged before it is compacted between the pressure-exerting roller (6b) and a lower roller body (6a4) which is situated underneath.

2. Aeration device (1) according to Claim 1, **characterized in that** the mutual distance between the lower roller bodies (6a1;6a2;6a3;6a4) is adjustable.

3. Aeration device (1) according to Claim 1 or 2, **characterized in that** the lower roller bodies (6a1;6a2;6a3;6a4) extend in a horizontal direction next to one another.

4. Aeration device (1) according to one of the preceding claims, **characterized in that** said pressure-exerting roller (6b) is arranged so as to be movable counter to a spring force.

5. Aeration device (1) according to Claim 4, **characterized in that** said pressure-exerting roller (6b) comprises compression springs or tension springs.

6. Aeration device (1) according to one of the preceding claims, **characterized in that** the distance between the pressure-exerting roller (6b) and the roller body (6a4) situated underneath is adjustable.

7. Aeration device (1) according to one of the preceding claims, **characterized in that** the guide means (6a;6b) have a width which at least corresponds to the working width of the aerating blades (3).

8. Aeration device (1) according to one of the preceding claims, **characterized in that,** in use, the pressure-exerting roller (6b) rotates at a higher speed than the lower guide means.

9. Aeration device (1) according to one of the preceding claims, **characterized in that** the pressure-exerting roller (6b) has a larger diameter than the lower guide means.

10. Aeration device (1) according to one of the preceding claims, **characterized in that** the rotating shaft (2) furthermore comprises a number of carrier bodies (7) along its length which are provided with a number of radially extending wing elements (8) on their periphery which, in use, generate an air displacement.

11. Aeration device (1) according to Claim 10, **characterized in that** the wing elements (8) are made from a flexible and pliable material.

## Patentansprüche

1. Vertikutiergerät (1) designt um einen Grasstreifen zu vertikutieren, aufweisend eine rotierende Welle (2), die entlang ihrer Länge ausgestattet ist mit einer Zahl von Vertikutierklingen (3), die rechtwinklig zu der Welle sind und designt, um Teile von dem Grasstreifen zu lockern und zu entfernen, ein Führungsgerät (4) zum Sammeln des Materials gelockert durch die Vertikutierklingen (3) und zum Abfördern des Materials in die Richtung von einem Sammelgerät (5), **dadurch gekennzeichnet, dass** das Führungsgerät aufweist untere (6a) Führungsmittel, geformt durch eine Zahl von nebeneinander platzierten, rotierbaren Walzenkörpern, und obere (6b) Führungsmittel, geformt durch eine rotierbare, druckausübende Walze (6b), die in entgegengesetzten Richtungen zueinander rotiert werden können, dem zufolge wird das gelockerte Material verdichtet zwischen den Führungsmitteln (6a und 6b) während es abgefördert wird, und dass die unteren Führungsmittel aufweisen zumindest drei räumlich getrennte untere Walzenkörper (6a1; 6a2; 6a3; 6a4) dem zufolge das gelockerte Material zumindest gesiebt wird während es abgefördert wird bevor es verdichtet wird zwischen der druckausübenden Walze (6b) und einem unteren Walzenkörper (6a4), der darunter gelegen ist.

2. Vertikutiergerät (1) gemäß Anspruch 1, **dadurch gekennzeichnet, dass** die gegenseitige Distanz zwischen den unteren Walzenkörpern (6a1; 6a2; 6a3; 6a4) einstellbar ist.

3. Vertikutiergerät (1) gemäß Anspruch 1 oder 2, **dadurch gekennzeichnet, dass** die unteren Walzenkörper (6a1; 6a2; 6a3; 6a4) sich in einer horizontalen Richtung nebeneinander erstrecken.

4. Vertikutiergerät (1) gemäß einem von den vorangegangenen Ansprüchen, **dadurch gekennzeichnet, dass** die druckausübende Walze (6b) so angeordnet ist, dass sie gegen eine Federkraft beweglich ist.

5. Vertikutiergerät (1) gemäß Anspruch 4, **dadurch gekennzeichnet, dass** die druckausübende Walze (6b) Druckfedern oder Zugfedern aufweist.

6. Vertikutiergerät (1) gemäß einem von den vorangegangenen Ansprüchen, **dadurch gekennzeichnet, dass** die Distanz zwischen der druckausübenden Walze (6b) und dem Walzenkörper (6a4), der darunter gelegen ist, einstellbar ist.

7. Vertikutiergerät (1) gemäß einem von den vorangegangenen Ansprüchen, **dadurch gekennzeichnet, dass** die Führungsmittel (6a; 6b) eine Breite haben, die zumindest mit der Arbeitsbreite von den Vertikutierklingen (3) korrespondiert.

8. Vertikutiergerät (1) gemäß einem von den vorangegangenen Ansprüchen, **dadurch gekennzeichnet, dass**, bei Verwendung, die druckausübende Walze (6b) mit einer höheren Geschwindigkeit rotiert als die unteren Führungsmittel.

9. Vertikutiergerät (1) gemäß einem von den vorangegangenen Ansprüchen, **dadurch gekennzeichnet, dass** die druckausübende Walze (6b) einen größeren Durchmesser als die unteren Führungsmittel hat.

10. Vertikutiergerät (1) gemäß einem von den vorangegangenen Ansprüchen, **dadurch gekennzeichnet, dass** die rotierende Welle (2) darüber hinaus aufweist eine Zahl von Trägerkörpern (7) entlang ihrer Länge, die ausgestattet sind mit einer Zahl von sich radial erstreckenden Flügelelementen (8) auf ihrer Peripherie, die, bei Verwendung, eine Luftverdrängung erzeugen.

11. Vertikutiergerät (1) gemäß Anspruch 10, **dadurch gekennzeichnet, dass** die Flügelelemente (8) hergestellt sind aus einem flexiblen und biegsamen Material.

## Revendications

1. Dispositif d'aération (1) conçu pour aérer une bande de gazon, comprenant un arbre tournant (2) pourvu sur sa longueur d'un certain nombre de lames d'aération (3) qui sont perpendiculaires à l'arbre et conçues pour détacher et enlever des portions de la bande de gazon, un dispositif de guidage (4) destiné à collecter la matière détachée par les lames d'aération (3) et la décharger vers un dispositif de collecte (5), **caractérisé en ce que** ledit dispositif de guidage comprend un moyen de guidage inférieur (6a) constitué d'un certain nombre d'éléments de roulement rotatifs placés côte à côte, et un moyen de guidage supérieur (6b) constitué d'un rouleau rotatif d'application de pression (6b), qui peuvent tourner dans des sens opposés l'un par rapport à l'autre, ce qui a pour conséquence de compacter la matière détachée entre lesdits moyens de guidage (6a et 6b) pendant qu'elle est déchargée, et que le moyen de guidage inférieur comprend au moins trois éléments de roulement inférieurs espacés (6a1 ; 6a2 ; 6a3 ; 6a4), ce qui a pour conséquence de tamiser au moins en partie la matière détachée pendant qu'elle est déchargée avant d'être compactée entre le rouleau d'application de pression (6b) et un élément de roulement inférieur (6a4) situé en dessous.

2. Dispositif d'aération (1) selon la revendication 1, **caractérisé en ce que** la distance entre les différents éléments de roulement (6a1 ; 6a2 ; 6a3 ; 6a4) est réglable.

3. Dispositif d'aération (1) selon la revendication 1 ou 2, **caractérisé en ce que** les éléments de roulement inférieurs (6a1 ; 6a2 ; 6a3 ; 6a4) s'étendent côte à côte dans une direction horizontale.

4. Dispositif d'aération (1) selon l'une des revendications précédentes, **caractérisé en ce que** ledit rouleau d'application de pression (6b) est disposé de manière à être mobile contre la force d'un ressort.

5. Dispositif d'aération (1) selon la revendication 4, **caractérisé en ce que** ledit rouleau d'application de pression (6b) comprend des ressorts de compression ou des ressorts de tension.

6. Dispositif d'aération (1) selon l'une des revendications précédentes, **caractérisé en ce que** la distance entre le rouleau d'application de pression (6b) et l'élément de roulement (6a4) situé en dessous est réglable.

7. Dispositif d'aération (1) selon l'une des revendications précédentes, **caractérisé en ce que** les moyens de guidage (6a ; 6b) ont une largeur qui correspond au moins à la largeur de travail des lames d'aération (3).

8. Dispositif d'aération (1) selon l'une des revendications précédentes, **caractérisé en ce que**, pendant l'utilisation, le rouleau d'application de pression (6b) tourne plus rapidement que le moyen de guidage inférieur.

9. Dispositif d'aération (1) selon l'une des revendications précédentes, **caractérisé en ce que** le rouleau d'application de pression (6b) a un diamètre supérieur à celui du moyen de guidage inférieur.

10. Dispositif d'aération (1) selon l'une des revendications précédentes, **caractérisé en ce que** l'arbre tournant (2) comprend en outre un certain nombre de corps porteurs (7) sur sa longueur, qui sont pourvues d'un certain nombre d'ailettes (8) s'étendant radialement sur leur périphérie qui, pendant l'utilisation, produisent un déplacement d'air.

11. Dispositif d'aération (1) selon la revendication 10, **caractérisé en ce que** les ailettes (8) sont réalisées en un matériau flexible et pliable.
